# EUROPEAN PATENT APPLICATION

(11) **EP 4 446 616 A1**
(43) Date of publication of application: **16.10.2024**
(21) Application number: 21966580.9
(22) Date of filing: 10.12.2021
(51) Int. Cl.: F16H 55/06

(54) **GEAR BLANK, AND METHOD FOR MANUFACTURING SAME AND METHOD FOR FINISHING SAME**

(71) Applicant: Gohsyu Corporation, Konan-shi, Shiga 520-3189 (JP)
(72) Inventor: TAKIDO Kazuaki, Konan-shi, Shiga 520-3189 (JP); TASAKI Kenji, Konan-shi, Shiga 520-3189 (JP); SAKAI Naoki, Konan-shi, Shiga 520-3189 (JP)
(74) Representative: Cabinet Beau de Loménie
(86) International application number: PCT/JP2021/045468
(87) International publication number: WO 2023/105739

(57) **Abstract**

A gear material that is for a differential ring gear or the like, and that has a relatively large shape and has spur gear teeth or helical gear teeth at an outer periphery thereof, and with which the yield of a final product is improved, the operating cost of gear cutting by a hobbing machine is reduced, and the rate of cutting is dramatically increased to reduce a machining time, whereby the total manufacturing cost can be reduced, and the gear material is in the shape of a ring having an outer diameter of at least 170 mm and an outer peripheral thickness of at least 30 mm, and has, at an outer peripheral surface thereof, spur gear teeth or helical gear teeth with a machining allowance of 0.2 mm to 2.0 mm on either side thereof.

## Description

### TECHNICAL FIELD

The present invention relates to gear materials, and production methods and finishing methods thereof. More particularly, the present invention relates to a gear material that is for a differential ring gear (final gear) or the like, and that has spur gear teeth or helical gear teeth at an outer periphery thereof, a production method thereof, and a finishing method thereof using a hobbing machine.

### BACKGROUND ART

Differential ring gears, which have a relatively large shape, i.e., an outer diameter of about 200 mm and a tooth width of about 40 mm, have conventionally been produced using, for example, the following methods (see Japanese Unexamined Patent Publication No. H07-275989).
(1) Forging a ring-shaped material using a 4000-ton press
(2) Forging, rolling, and oscillatory rolling using Wagner (Germany)'s scheme
(3) Rolling using two edge rolls and a receiving roll

In all of these methods, gear teeth are formed at an outer periphery (outer peripheral surface) of a material by gear cutting using a hobbing machine, followed by shaving, carburizing, and shot blasting. Thereafter, the gear teeth are finished by polishing or the like.

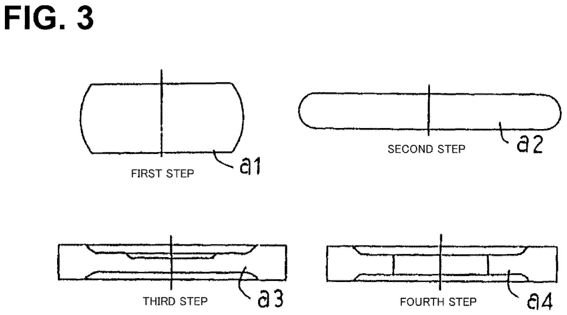

Method (1) of forging a ring-shaped material using a 4000-ton press includes, as illustrated in FIG. 3: a first step of vertically upset-forging a billet to form a barrel-shaped blank (a1); following this, a second step of vertically compressing the blank (a1) to form a disc-shaped blank (a2); a third step of die-forging the blank (a2) into a semi-product shape (a3) using a 4000-ton press; and finally, a fourth step of cutting out a web at a center portion by punching to form a final product shape (a4).

However, method (1) requires a large number of steps, disadvantageously leading to an increase in die cost.

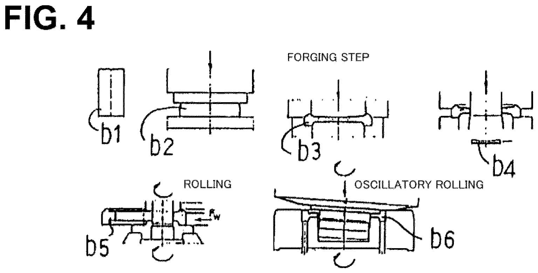

Method (2) of forging, rolling, and oscillatory rolling using Wagner (Germany)'s scheme includes, as illustrated in FIG. 4: a first step of vertically upset-forging a billet (b1) to form a disc-shaped blank (b2); a second step of die-forging the blank (b2) into a rough product shape (b3) using a 1600-ton press; a third step of cutting out a web (b4) at a center portion by punching; following this, a fourth step of rolling into a semi-product shape (b5); and finally, a fifth step of oscillatory rolling to form a final product shape (b6).

However, method (2) requires many kinds of equipment and a large number of pieces of equipment, and the die for oscillatory rolling costs high. In addition to a large number of steps, rolling and oscillatory rolling are performed in two heating processes, and therefore, a double heating cost is required. As a whole, the material cost is disadvantageously high.

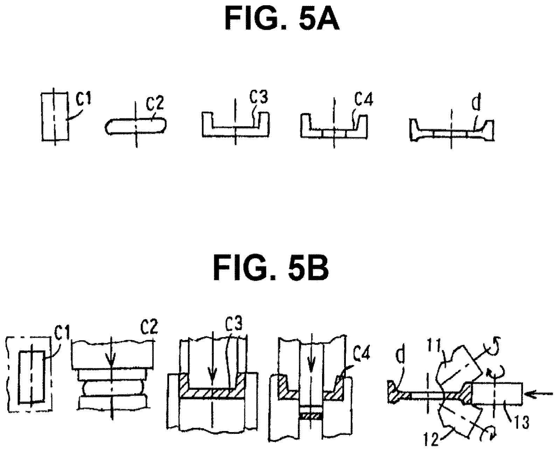

Method (3) of rolling using two edge rolls and a receiving roll includes, as illustrated in FIGS. 5A and 5B: a forging press step of upset-forging a billet (c1) into a disc-shaped blank (c2 to c3), and punching the blank (c3) at a bottom center thereof; and forming the forged blank (c4) into a final product shape (d) by rolling using two edge rolls 11 and 12 that apply axial pressure to the forged blank (c4), and a receiving roll 13 that applies pressure radially inward to impart an outer peripheral surface shape to a final product.

However, in the case of method (3), the final product shape (d) is a ring shape, and therefore, a large machining allowance is present for gear cutting with a hobbing machine, disadvantageously leading to a deterioration in machining yield and a decrease in tool life. In addition, the cutting rate is typically at most 200 m/min, disadvantageously leading to a time-consuming and high-cost machining step.

### CITATION LIST

### PATENT LITERATURE

Patent Document 1: Japanese Unexamined Patent Application Publication No. H7-275989

### SUMMARY OF INVENTION

### TECHNICAL PROBLEM

With the above problems with conventional differential ring gear production methods in mind, it is an object of the present invention to provide a gear material that is for a differential ring gear or the like, and that has a relatively large shape and has spur gear teeth or helical gear teeth at an outer periphery thereof, and with which the yield of a final product is improved, the operating cost of gear cutting by a hobbing machine is reduced, and the rate of cutting is dramatically increased to reduce a machining time, whereby the total manufacturing cost can be reduced; a production method thereof; and a finishing method thereof using a hobbing machine.

### SOLUTION TO PROBLEM

To achieve the object, a gear material according to the present invention is in the shape of a ring having an outer diameter of at least 170 mm (about 170 mm to about 230 mm) and an outer peripheral thickness of at least 30 mm (about 30 mm to about 50 mm), and having, at an outer peripheral surface thereof, spur gear teeth or helical gear teeth with a machining allowance of 0.2 mm to 2.0 mm on either side thereof.

In this case, the gear material can have a gear module of 1.5 to 3.5.

A method for producing a gear material according to the present invention is characterized in that the gear material is formed from a billet only by hot forging.

A method for finishing a gear material according to the present invention is characterized in that the gear material is finished using a hobbing machine at a cutting rate of 250 m/min to 500 m/min.

As used herein, the cutting rate is a numerical value that is set when a cutter made of a high-speed tool steel (high-speed steel) is used.

### ADVANTAGEOUS EFFECT OF INVENTION

With a gear material according to the present invention and a production method thereof and a finishing method thereof using a hobbing machine, the yield of a final product of a gear material that is for a differential ring gear or the like, and that has a relatively large shape and has spur gear teeth or helical gear teeth at an outer periphery thereof is improved, the operating cost of gear cutting by a hobbing machine is reduced, and the rate of cutting is dramatically increased to reduce a machining time, whereby the total manufacturing cost can be reduced.

### BRIEF DESCRIPTION OF DRAWINGS

FIG. 1 is a diagram for describing an example of a method for producing a gear material according to the present invention.
FIG. 2A is a diagram for describing hobbing allowances of the present invention and a conventional example, and FIG. 2B is a diagram for describing yields of products of the present invention and a conventional example.
FIG. 3 is a diagram for describing a method of forging a ring-shaped material by 4000-ton press.
FIG. 4 is a diagram for describing a method of forging, rolling, and oscillatory rolling in Wargner (Germany)'s scheme.
FIGS. 5A and 5B are diagrams for describing a method of rolling using two edge rolls and a receiving roll.

### DESCRIPTION OF EMBODIMENTS

Embodiments of a gear material according to the present invention, a production method thereof, and a finishing method thereof using a hobbing machine will be described below with reference to the accompanying drawings.

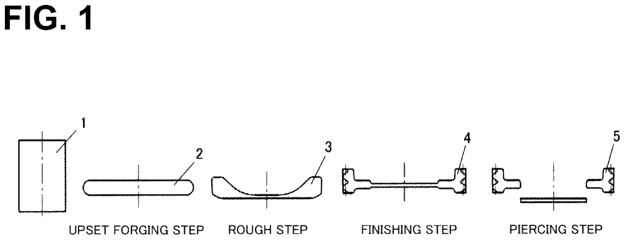

FIG. 1 illustrates an example of a method for producing a gear material according to the present invention.

In the method for producing a gear material, gear teeth are formed during a series of steps using a conventional production line for forging a ring gear without gear teeth.

Initially, a billet (cylindrical material) 1 is heated to a predetermined temperature in an induction heating furnace, and then upset-forged into a disc-shaped blank 2 by an upset forging step including a plurality of steps. A blank 3 having a thicker outer peripheral portion is formed by volume distribution in a rough step. In a finishing step, produced is a gear material 4 that is in the shape of a ring having an outer diameter of at least 170 mm (about 170 mm to about 230 mm) and an outer peripheral thickness of at least 30 mm (about 30 mm to about 50 mm), and has, at an outer peripheral surface thereof, spur gear teeth or helical gear teeth having a module of 1.5 to 3.5 (helix angle: at most about 35°) with a machine allowance of 0.2 mm to 2.0 mm (preferably 0.2 mm to 1.5 mm, more preferably 0.2 mm to 1.0 mm) on either side thereof, using a forging die (forging die having, in an inner peripheral surface thereof, a shape corresponding to spur gear teeth or helical gear teeth to be formed). By piercing the gear material 4 in a piercing step as a final step, a gear material 5 is obtained.

Here, the temperature of a gear tooth portion is likely to decrease because of its small volume, and therefore, needs to be maintained. In this process, the formation of the gear material 5 from the billet 1 only by hot forging is completed quickly by a series of forming steps in a pressing machine, and therefore, can be carried out with the temperature maintained sufficiently high. Thus, it is not necessary to heat again. More specifically, the cycle time it takes to carry out each step of forming the gear material 5 from the billet 1 is set to at most 10 seconds, e.g., about 4 seconds to about 6 seconds. As a result, it is easy to manage temperature, and the amount of oxide scale generated can be reduced.

After hot forging, the gear material 5 is subjected to a finishing process, i.e., a material thermal treatment (forging isothermal annealing, normalizing, or without a thermal treatment) and then shot blasting, followed by lathe/piercing, hobbing (gear cutting in an outer peripheral surface using a hobbing machine), and a thermal treatment (carburizing, highfrequency quenching/tempering, or the like), and optionally, tooth surface polishing or the like, to obtain a final product.

Here, the spur gear teeth or helical gear teeth of the gear material 5 formed using a forging die can be hobbed using a conventional hobbing machine for machining a ring-shaped material, with the threads of the hobbing machine mating with the gear teeth (the gear teeth at the outer peripheral surface are finished using the hobbing machine).

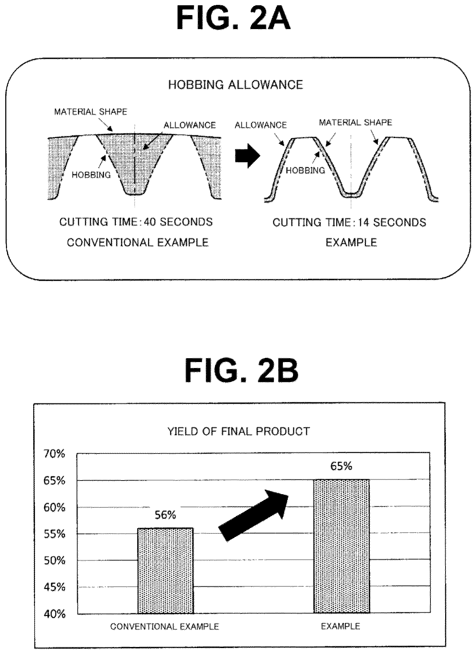

As illustrated in FIG. 2A, the gear teeth at the outer peripheral surface of the gear material 5 have a machining allowance of 0.2 mm to 2.0 mm on either side thereof. The small machining allowance can allow finishing by means of high-speed cutting of at most 500 m/min (250 m/min to 500 m/min), resulting in a reduction in machining time. Here, the cutting rate is a numerical value that is set when a cutter (cutter diameter: ø85 mm, the number of threads: 4, and the number of grooves: 14) made of a high-speed tool steel (high-speed steel) is used.

It should be note that a typical cutter made of high-speed tool steel (high-speed steel) has a cutting rate of about 200 m/min.

Specifications (example) of a final product thus produced (the gear material 5) are described below.
Specifications of a final product (the gear material 5)
Outer diameter: 206 mm
Reference diameter: 163 mm
Outer peripheral thickness (tooth width): 40 mm
Number of teeth: 51
Module: 3.2
Whole depth: 8.7 mm
Helix angle: 31°
Machining allowance: 0.2 mm to 1.0 mm on either side

As a result, the yield of a final product of a gear material that is for a differential ring gear or the like, and that has a relatively large shape and has spur gear teeth or helical gear teeth at an outer periphery thereof is improved, the operating cost of gear cutting by a hobbing machine is reduced (a reduction in the cost of a tool due to an improvement in tool life is included), and the rate of cutting is dramatically increased to reduce a machining time, whereby the total manufacturing cost can be reduced.

Specifically, as illustrated in FIG. 2B, a machining allowance of 0.2 mm to 2.0 mm (preferably 0.2 mm to 1.5 mm, more preferably 0.2 mm to 1.0 mm) is provided on either side. Therefore, the yield of a final product, i.e., 65% of examples, is improved by about 10% from 56% of conventional examples (ring gears without gear teeth), and the amount of a material to be cut by hobbing (finishing of the gear teeth at the outer peripheral surface using a hobbing machine) can be reduced (by a factor of about two to about three).

In addition, the cutting rate can be increased to 250 m/min to 500 m/min. In addition to the reduction of the amount of a material to be cut, the net machining time can be reduced from about 42 seconds (conventional examples (ring gears without gear teeth)) to about 14 seconds (examples), result in a reduction in cycle time (reduction by at least 40%).

The cutting load due to hobbing is small, and therefore, the increase in the temperature of a workpiece (the gear material 5) is reduced, whereby the adjustment of temperature is not required during hobbing.

For the spur gear teeth or helical gear teeth formed at the outer peripheral surface of the gear material 5 using a forging die, metal flow is not interrupted, and therefore, the gear teeth can have a high strength.

In the foregoing, a gear material according to the present invention, and a production method and finishing method thereof, have been described by way of example. The present invention is not limited to the configurations described in the above examples. Various changes and modification can be made to the examples, as appropriate, without departing the spirit and scope of the present invention.

### INDUSTRIAL APPLICABILITY

With a gear material according to the present invention and a production method and finishing method thereof, the yield of a final product is improved, the operating cost of gear cutting by a hobbing machine is reduced, and the rate of cutting is dramatically increased to reduce a machining time, whereby the total manufacturing cost can be reduced. Therefore, the present invention is widely useful for a gear material that is for a differential ring gear or the like, and that has a relatively large shape and has spur gear teeth or helical gear teeth at an outer periphery thereof, and a production method and finishing method thereof.

### DESCRIPTION OF REFERENCE NUMERALS

- 1: billet (cylindrical material)
- 2: blank
- 3: blank
- 4: gear material
- 5: gear material

## Claims

1. A gear material, wherein
the gear material is in the shape of a ring having an outer diameter of at least 170 mm and an outer peripheral thickness of at least 30 mm, and having, at an outer peripheral surface thereof, spur gear teeth or helical gear teeth with a machining allowance of 0.2 mm to 2.0 mm on either side thereof.

2. The gear material of claim 1, wherein
the gear material has a gear module of 1.5 to 3.5.

3. A method for producing the gear material of claim 1 or 2, comprising:
forming the gear material from a billet only by hot forging.

4. A method for finishing the gear material of claim 1 or 2, comprising:
finishing the gear material using a hobbing machine at a cutting rate of 250 m/min to 500 m/min.
